Europäisches Patentamt

European Patent Office

Office européen des brevets

(11) Veröffentlichungsnummer: **0 292 038**
**A2**

(12) **EUROPÄISCHE PATENTANMELDUNG**

(21) Anmeldenummer: 88200823.8

(22) Anmeldetag: 27.04.88

(51) Int. Cl.⁴: **B62D 1/04**

(30) Priorität: 21.05.87 DE 3717002

(43) Veröffentlichungstag der Anmeldung:
23.11.88 Patentblatt 88/47

(84) Benannte Vertragsstaaten:
**DE ES FR GB IT SE**

(71) Anmelder: **KOLBENSCHMIDT**
**Aktiengesellschaft**
**Karl-Schmidt-Strasse 8/12 Postfach 1351**
**D-7107 Neckarsulm(DE)**

(72) Erfinder: **Kreuzer, Martin**
**Wendelinusweg 2**
**D-8751 Kleinwallstadt(DE)**
Erfinder: **Weiss, Franz, Dr.**
**Wilhelmstrasse 43/1**
**D-7107 Neckarsulm(DE)**

(74) Vertreter: **Rieger, Harald, Dr.**
**Reuterweg 14**
**D-6000 Frankfurt am Main(DE)**

(54) **Skelettkonstruktion für Kraftfahrzeug-Lenkräder.**

(57) Bei einer Skelettkonstruktion für Lenkräder sind die Lenkradnabe, die Lenkradspeichen und der Um-guß der Lenkradspeichen an dem aus einem metalli-schen Werkstoff bestehenden Lenkradkranz einteilig aus Aluminium-Druckguß gegossen.

Um eine Variation des Trägheitsmoments bei kleinster Lenkradmasse und gleichen Lenkradab-messungen zu ermöglichen, wird für das Druckgu-ßteil eine Aluminiumlegierung des Typs AlSi7Mg, AlSi9Mg oder AlSi10Mg verwendet und der Lenkrad-kranz aus Stahl oder Aluminium als Voll- oder Hohl-profil ausgeführt.

## Skelettkonstruktion für Kraftfahrzeug-Lenkräder

Die Erfindung betrifft eine Skelettkonstruktion für Kraftfahrzeug-Lenkräder, bei der die Lenkradnabe, die Lenkradspeichen und der Umguß der Lenkradspeichen am Lenkradkranz einteilig aus Aluminium-Druckguß gegossen sind und der Lenkradkranz aus einem metallischen Werkstoff besteht.

Moderne Kraftfahrzeuge besitzen infolge der vergleichsweise hohen aktiven Fahrsicherheit und des Fahrkomforts einen solchen Gesamtkomfort, daß bereits geringste Störungen im allgemeinen Schwingungspegel vom Fahrer des Kraftfahrzeugs als störend empfunden werden. Als eine solche Störquelle ist die Lenkungsunruhe anzusehen, die im Geschwindigkeitsbereich von 80 bis 130 km/h vom Fahrer des Kraftfahrzeugs als Drehschwingungen und Vertikalschwingungen am Lenkrad selbst wahrgenommen werden. Den durch statisch-dynamische Unwuchten der Räder und Schwingungen des Rades um die Hochachse verursachten Lenkraddrehschwingungen kann man durch eine hohes Trägerheitsmoment des Lenkrades, d.h. eine große Schwungmasse, begegnen, während zur Beseitigung der durch Unwucht der Räder an der Hinterachse hervorgerufenen Vertikalschwingungen des Lenkrades eine geringe Lenkradmasse von Vorteil ist. Die Komplexität der Lenkungsunruhe erfordert vom Lenkradhersteller einen Kompromiß zwischen großem Trägheitsmoment einerseits und kleiner Lenkradmasse andererseits, wobei der Kompromiß fahrzeugspezifisch unterschiedlich sein kann, insbesondere jedoch eine Variation des Trägheitsmomentes bei kleinster Lenkradmasse anzustreben ist. Der Kompromiß darf jedoch nicht zu Lasten der Betriebs- und Unfallsicherheit gehen.

Die Lösung dieser Aufgabe besteht in einer Skelettkonstruktion, bei der bei gleichen Lenkradabmessungen für das gewichtsoptimierte Druckgußteil eine durch Antimon oder Strontium veredelte und nach dem Gießen wärmebehandelte Aluminiumlegierung des Typs AlSi7Mg, AlSi9Mg oder AlSi10Mg verwendet und der Lenkradkranz je nach gewünschtem Trägheitsmoment aus Stahl oder Aluminium bzw. -legierung als Voll- oder Hohlprofil ausführbar ist. Das Druckgußteil besitzt ein feinkristallines Gefüge sowie Spannungsfreiheit bei maximaler Dehnung. Bei einer Festigkeit von z.B. 140 N/mm$^2$ werden Gußteildehnungen bis zu 17 % erreicht. Eine solche Skelettkonstruktion ermöglicht eine Variation des Trägheitsmomentes bei jeweils minimaler Lenkradmasse.

Um eine hohe Biegefestigkeit der Lenkradspeichen zu erzielen, besitzen diese zweckmäßigerweise ein U-förmiges lenksäulenseitig offenes Profil und sind nach dem Prinzip des Trägers gleicher Biegefestigkeit ausgelegt. Das bedeutet, daß bei Belastung im Falle eines Unfalls die Dehnung über die gesamte Länge der Speichen abgebaut wird, wobei maximale Spannungen von 100 N/mm$^2$ ohne Bruch ausgehalten werden. Die höchste Belastung entsteht in den Schenkeln des U-förmigen Speichenprofils, so daß diese bei Überlastung ausbeulen und dadurch eine Energieumwandlung durch Formänderungsarbeit hervorrufen.

Um ein optimales Festigkeits-Dehnungs-Verhältnis zu erzielen, werden die Druckgußteile 0,5 bis 4 h lang bei 475 bis 530 °C ausgelagert, danach abgeschreckt und 2 bis 7 h lang bei Temperaturen von 100 bis 200 °C angelassen.

In der EP-PS 29 616 ist ein Einspeichen-Lenkrad vorgesehen, das mit einer Kunststoffschicht ummantelt ist und bei dem Lenkradnabe sowie die in der Mittelebene verlaufende Lenkradspeiche einteilig aus einer Aluminiumlegierung gegossen sind und der aus Stahl bestehende Lenkradkranz im Bereich der Lenkradspeiche ebenfalls mit der Aluminiumlegierung einteilig umgossen ist, wobei Lenkradnabe, Lenkradspeiche und der Umguß der Lenkradspeiche am Lenkradkranz aus einem Druckgußteil bestehen. Ein solches Lenkrad ist mit vergleichsweise verringertem Aufwand herstellbar, besitzt eine gute ästhetische Wirkung und die im Falle eines Unfalls aus einem Lenkradaufprall resultierende Verletzungsgefahr für den Fahrzeugführer ist infolge der im Bereich der Verbindung des Lenkradkranzes mit der Lenkradspeiche angebrachten Kerben relativ gering. Das Problem der durch Dreh- und Vertikalschwingungen am Lenkrad erzeugten Lenkungsruhe ist in dieser Druckschrift jedoch nicht angesprochen.

In der DE-OS 43 25 959 ist ein Kraftfahrzeug-Lenkrad beschrieben, dessen Lenkradnabe, Lenkradspeichen und der Umguß der Lenkradspeichen am Lenkradkranz aus einem einteilig gegossenen Druckgußteil und dessen Lenkradkranz zum Zwecke der Gewichtsreduzierung aus mit Fasern verstärktem synthetischem Kunststoff bestehen. An die Möglichkeit der Variation des Trägheitsmoment bei kleinster Lenkradmasse ist nicht gedacht.

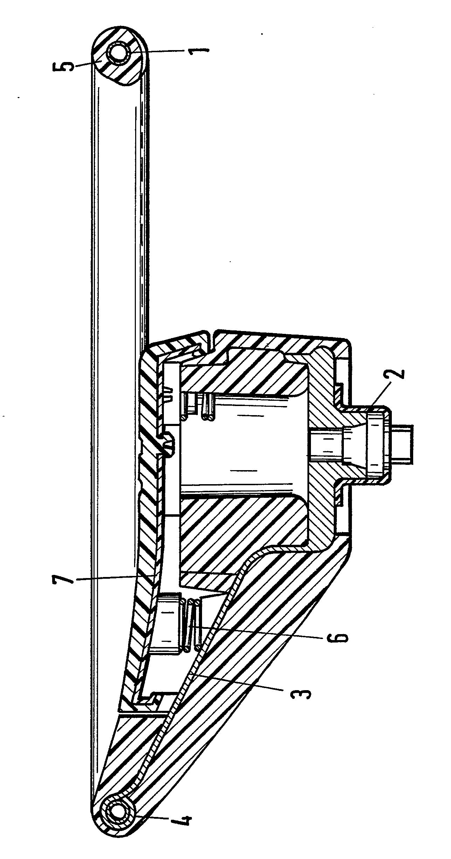

In der Zeichnung ist ein durch die Mittelachse des erfindungsgemäßen Lenkrades gelegter Querschnitt dargestellt. Die gegenüber dem aus Aluminiumrohr des Typs AlCuMgl bestehenden Lenkradkranz (1) versenkt angeordnete Lenkradnabe (2) sowie die damit einteilig verbundenen Lenkradspeichen (3) und der Umguß (4) der Lenkradspeichen (3) am Lenkradkranz (1) sind im Vakuumdruckgußverfahren hergestellt. Die Lenkradnabe (2), die Lenkradspeichen (3) und der Lenkradkranz (1) sind mit einer elastisch verformbaren Schicht (5) aus Polyurethanschaum ummantelt, wobei über der Lenkradnabe (2) der über Federelemente (6) im Abstand gehaltene Kontaktgeber (7) für die Signaleinrichtung angeordnet ist.

## Ansprüche

1. Skelettkonstruktion für Kraftfahrzeug-Lenkräder, bei der Lenkradnabe, Lenkradspeichen und der Umguß der Lenkradspeichen am Lenkradkranz einteilig aus Aluminium-Druckguß gegossen sind und der Lenkradkranz aus einem metallischen Werkstoff besteht, dadurch gekennzeichnet, daß bei gleichen Lenkradabmessungen für das gewichtsoptimierte Druckgußteil eine durch Antimon oder Strontium veredelte und nach dem Gießen unter Vakuum wärmebehandelte Aluminiumlegierung des Typs AlSi7Mg, AlSi9Mg oder AlSi10Mg verwendet und der Lenkradkranz (1) je nach gewünschtem Trägheitsmoment aus Stahl oder Aluminium bzw. -legierung als Voll- oder Hohlprofil ausführbar ist.

2. Skelettkonstruktion nach Anspruch 1, dadurch gekennzeichnet, daß die Lenkradspeichen (3) nach dem Prinzip des Trägers gleicher Biegefestigkeit ausgelegt sind und ein U-förmiges, lenksäulenseitig offenes Profil besitzen.

3. Skelettkonstruktion nach den Ansprüchen 1 und 2, gekennzeichnet durch eine 0,5- bis 4stündige Wärmebehandlung bei 475 bis 530°C, einer nachfolgenden Abschreckung und einem 2- bis 7stündigen Anlassen bei Temperaturen von 100 bis 200°C.

0 292 038